# EUROPEAN PATENT APPLICATION

(11) **EP 4 848 829 A1**
(43) Date of publication of application: **02.12.2026**
(21) Application number: 24919317.8
(22) Date of filing: 25.01.2024
(51) Int. Cl.: H04W 52/02

(54) **WIRELESS COMMUNICATION METHOD AND APPARATUS**

(71) Applicant: Quectel Wireless Solutions Co., Ltd., Shanghai 201601 (CN)
(72) Inventor: HUANG, Qufang, Shanghai 201601 (CN)
(74) Representative: Fish & Richardson P.C.
(86) International application number: PCT/CN2024/074074
(87) International publication number: WO 2025/156208

(57) **Abstract**

A wireless communication method and an apparatus are provided. The method includes: receiving, by a terminal device, a reference signal transmitted by a first cell, where the transmitting of the reference signal is triggered by the terminal device and/or a primary cell.

## Description

### TECHNICAL FIELD

The present application relates to the technical field of communications, and more specifically, to a wireless communication method and an apparatus.

### BACKGROUND

Currently, a cell may transmit a reference signal periodically, and a terminal device may receive the reference signal to communicate with the cell. However, transmitting a reference signal periodically is not conducive to saving power.

### SUMMARY

The present application provides a wireless communication method and an apparatus. The following describes the aspects related to the present application.

According to a first aspect, a wireless communication method is provided. The method includes: receiving, by a terminal device, a reference signal transmitted by a first cell, where the transmitting of the reference signal is triggered by the terminal device and/or a primary cell.

According to a second aspect, a terminal device is provided. The terminal device includes: a receiving unit, receiving a reference signal transmitted by a first cell, where the transmitting of the reference signal is triggered by the terminal device and/or a primary cell.

According to a third aspect, a terminal device is provided, and includes a processor, a memory, and a communications interface. The memory is configured to store one or more computer programs, and the processor is configured to invoke the computer program in the memory, to cause the terminal device to execute some or all of the steps in the method according to the first aspect.

According to a fourth aspect, an embodiment of the present application provides a computer-readable storage medium, where the computer-readable storage medium stores a computer program, and the computer program causes a communications device (for example, a terminal device) to execute some or all of the steps in the method according to the first aspect.

According to a fifth aspect, an embodiment of the present application provides a computer program product. The computer program product includes a non-transitory computer-readable storage medium that stores a computer program. The computer program is operable to cause a communications device (for example, a terminal device) to execute some or all of the steps in the method according to the first aspect. In some implementations, the computer program product may be a software installation package.

According to a sixth aspect, an embodiment of the present application provides a chip, where the chip includes a memory and a processor, and the processor may invoke a computer program from the memory and run the computer program, to implement some or all of the steps described in the method according to the first aspect.

According to the present application, at least one of the terminal device or the primary cell triggers the first cell to transmit the reference signal, such that the first cell may transmit the reference signal after being triggered. Compared with a manner of transmitting the reference signal periodically, the solution in embodiments of the present application may save power.

### BRIEF DESCRIPTION OF THE DRAWINGS

FIG. 1 shows a wireless communications system 100 to which embodiments of the present application are applied.
FIG. 2 is a schematic diagram of an SSB burst set according to an embodiment of the present application.
FIG. 3 shows a structure of an SSB.
FIG. 4 is a schematic flowchart of selecting a secondary cell by a primary cell.
FIG. 5 is a schematic flowchart of a wireless communication method according to an embodiment of the present application.
FIG. 6 is a schematic flowchart of indicating a first resource according to an embodiment of the present application.
FIG. 7 is a schematic diagram of time resources used for transmitting a reference signal according to an embodiment of the present application.
FIG. 8 is another schematic diagram of time resources used for transmitting a reference signal according to an embodiment of the present application.
FIG. 9 is a schematic flowchart of instructing a first cell to stop transmitting a reference signal according to an embodiment of the present application.
FIG. 10 is a schematic diagram of an indication of frequencies according to an embodiment of the present application.
FIG. 11 is another schematic diagram of indication of frequencies according to an embodiment of the present application.
FIG. 12 is a schematic flowchart of acquiring TA according to an embodiment of the present application.
FIG. 13 is a schematic flowchart of triggering transmission of a reference signal by a terminal device according to an embodiment of the present application.
FIG. 14 is a schematic block diagram of a terminal device according to an embodiment of the present application.
FIG. 15 is a schematic structural diagram of a communications apparatus according to an embodiment of the present application.

### DETAILED DESCRIPTION OF THE EMBODIMENTS

The technical solutions in the present application are described below with reference to the accompanying drawings.

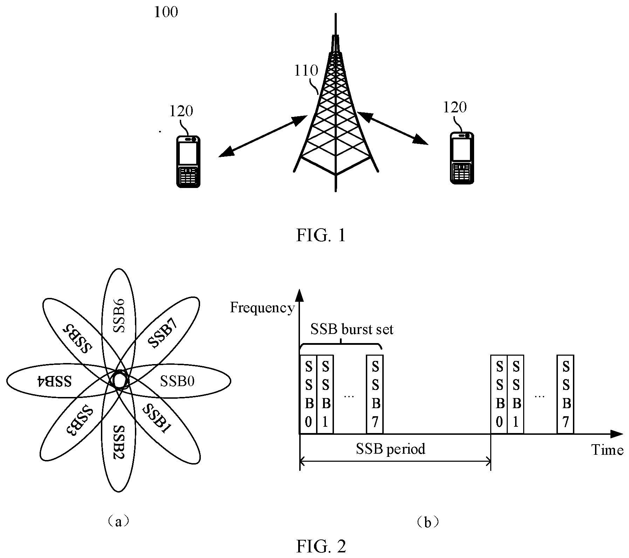

FIG. 1 shows a wireless communications system 100 to which embodiments of the present application are applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 exemplarily shows one network device and two terminals. Optionally, the wireless communications system 100 may include a plurality of network devices, and another quantity of terminal devices may be included within coverage of each network device, which is not limited in embodiments of the present application.

Optionally, the wireless communications system 100 may further include another network entity such as a network controller or a mobility management entity, which is not limited in embodiments of the present application.

It should be understood that the technical solutions of embodiments of the present application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in the present application may further be applied to a future communications system, such as a 6th generation mobile communications system or a satellite communications system.

The terminal device in embodiments of the present application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in the embodiments of the present application may be a device providing a user with voice and/or data connectivity and capable of connecting people, objects, and machines, such as a handheld device or vehicle-mounted device having a wireless connection function. The terminal device in embodiments of the present application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without the relay of a communication signal through a base station.

The network device in embodiments of the present application may be a device for communicating with the terminal device. The network device may also be referred to as an access network device or a radio access network device. For example, the network device may be a base station. The network device in embodiments of the present application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may refer to a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device used by the network device are not limited in embodiments of the present application.

The base station may be stationary or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of the present application may be a CU or a DU, or the network device includes a CU and a DU. The gNB may further include an AAU.

The network device and the terminal device may be deployed on land, including being deployed indoors or outdoors, being handheld, or vehicle-mounted, may be deployed on a water surface, or may be deployed on a plane, a balloon, or a satellite in the air. In embodiments of the present application, a scenario of the network device and the terminal device is not limited.

It should be understood that all or some of functions of the communications device in the present application may also be implemented by software functions running on hardware, or by virtualization functions instantiated on a platform (for example, a cloud platform).

### Multi-beam system in an NR system

A design objective of a communications system (for example, NR) includes implementing high-bandwidth communication in a high frequency band (for example, a frequency band above 6 GHz). When a working frequency becomes higher, path loss in a transmission process increases, which affects a coverage capability of a high-frequency system. Therefore, to effectively ensure coverage of a high frequency band, an effective technical solution is based on a massive multiple-in multiple-out (Massive multiple-in multiple-out, Massive MIMO) antenna array, so as to form a shaped beam with greater gain, overcome propagation loss, and ensure coverage of the communications system.

In some communications systems (such as a 2G, 3G, or 4G system), a relatively wide beam (beam) is used for a cell (a sector) to cover the entire cell. Therefore, at each instant, each terminal device within coverage of the cell has an opportunity to obtain a resource allocated by the system.

In some communications systems (such as an NR or 5G system), the entire cell may be covered by different beams, that is, each beam covers a relatively small area, and an effect of covering the entire cell by using a plurality of beams is achieved through time-based sweeping.

Different beams may be identified based on different signals carried on the beams. For example, synchronization signal and physical broadcast channel blocks (synchronization signal/physical broadcast channel block, SS block, also referred to as SS/PBCH block or SSB) transmitted on different beams vary. A terminal device may identify different beams based on different SS blocks. For another example, channel state information reference signals (channel state information reference signal, CSI-RS) transmitted on different beams vary. The terminal device may identify different beams based on CSI-RS and/or CSI-RS resources.

For different communications systems, a downlink signal or a downlink channel (such as a physical downlink control channel (physical downlink control channel, PDCCH) and a physical downlink shared channel (physical downlink shared channel, PDSCH)) may be transmitted by using different downlink beams. For example, for a communications system below 6G, a terminal device generally does not have an analog beamforming capability. Therefore, the terminal device may use an omnidirectional antenna (or a near-omnidirectional antenna) to receive a downlink signal transmitted by a network device. The network device may transmit a downlink signal to the terminal device by using different downlink transmit beams. For another example, for a millimeter-wave system, a terminal device may have an analog beamforming capability, and the terminal device may receive a signal by using a downlink receive beam corresponding to a downlink transmit beam. In this case, the terminal device may determine, based on beam indication (beam indication) information, information related to a transmit beam on the network device side or information related to a corresponding receive beam on the terminal device side.

In some embodiments, the beam indication information may not directly indicate a beam itself, but instead indicate the beam based on quasi co-colated (quasi co-colated, QCL) information (or QCL assumption) between signals. The terminal device may determine a corresponding receive signal or channel based on the QCL information, and the QCL information may be indicated by using a TCI state (state). The following describes the QCL information and the TCI state in detail.

Generally, a beam used on a transmitting end to transmit a signal is referred to as a "transmit beam", and a beam used on a receiving end to receive a signal is referred to as a "receive beam".

In some cases, the transmit beam may also be referred to as a spatial domain transmission filter (spatial domain transmission filter). Accordingly, the receive beam may also be referred to as a spatial domain reception filter (spatial domain reception filter). In some other cases, the transmit beam may also be referred to as a spatial domain transmission parameter (spatial domain transmission parameter). Accordingly, the receive beam may also be referred to as a spatial domain reception parameter (spatial domain reception parameter). For ease of understanding, the beam is mainly used as an example for description in embodiments of the present application.

In some communications systems (such as a 5G system), the network device may transmit a reference signal periodically, and the terminal device may receive the reference signal to communicate with the cell. In some embodiments, the terminal device may communicate with the cell based on a signal measurement result obtained by measuring the reference signal. In some other embodiments, the terminal device may receive the reference signal to achieve downlink synchronization.

The following describes the solutions related to embodiments of the present application by using an example in which the reference signal includes an SSB.

The network device may transmit an SSB periodically, and the terminal device may receive the SSB to implement downlink synchronization with the cell. In addition, the terminal device may read a master indication block (master indication block, MIB) and access a network.

FIG. 2 shows a transmission resource for SSBs. The portion (a) as showed in FIG. 2 illustrates transmit beams for SSBs, and the network device may transmit SSBs to the terminal device by using different beams. Accordingly, the terminal device may receive the SSBs by using different beams. The portion (b) as showed in FIG. 2 illustrates instants of transmitting the SSBs, and the network device may transmit the SSBs to the terminal device at different instants. An SSB period may be used for transmitting an SSB burst set. An SSB burst set contains SSBs corresponding to a plurality of beams.

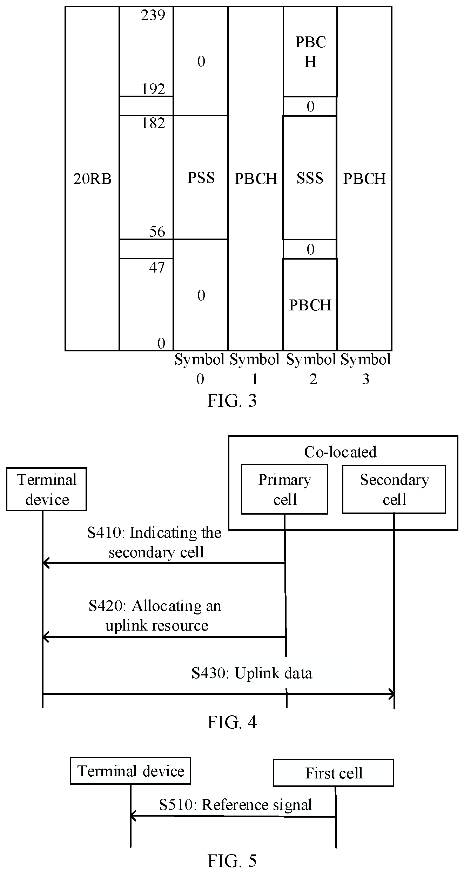

FIG. 3 shows a structure of an SSB. The SSB may include a primary synchronization signal (primary synchronization signal, PSS), a secondary synchronization signal (secondary synchronization signal, SSS), and a physical broadcast channel (physical broadcast channel, PBCH). The SSB may occupy four symbols in time domain and 240 subcarriers (that is, 20 resource blocks (resource Block, RB)) in frequency domain, which are numbered 0 to 239. The PSS is located on the middle 127 subcarriers of the symbol 0. The SSS is located on the middle 127 subcarriers of the symbol 2. To protect the PSS and the SSS, different subcarriers at two ends of each of the PSS and the SSS are set to 0. The PBCH is located in the symbol 1, the symbol 2, and the symbol 3. The PBCH occupies all of the subcarriers 1 to 239 in each of the symbol 1 and the symbol 3, and occupies all subcarriers in the symbol 2 except subcarriers occupied by the SSS and subcarriers protecting the SSS.

One SSB burst set occupies 5 ms in time domain. A quantity of SSBs included in one SSB burst set depends on a frequency of a cell. When the frequency of the cell is lower than 3 GHz, one SSB burst set contains four SSBs. When the frequency of the cell is between 3 GHz to 6 GHz, one SSB burst set contains eight SSBs (as shown in FIG. 2). When the frequency of the cell is higher than 6 GHz, one SSB burst set contains 64 SSBs.

The terminal device may acquire an SSB sequence number (or referred to as an SSB index), that is, order of a current SSB in the SSB burst set, based on a demodulation reference signal (demodulation reference signal, DM-RS) in the PBCH and information in an MIB, allowing the terminal device to learn a start instant of a 5 ms time interval (that is, a half-frame) in which a current SSB burst set is located. The terminal device may determine, based on a half-frame indication in the MIB, whether a time domain location of the current SSB is within a first half-frame or a second half-frame. In addition, the terminal device may acquire a current system frame number based on an SFN indication in the MIB, so as to achieve downlink synchronization.

The terminal device may access a network by accessing the cell. The 1^{st} cell accessed by the terminal device may be referred to as a primary cell (primary cell, PCell). When the terminal device has a relatively large amount of data to transmit, the terminal device may transmit the data through carrier aggregation (carrier aggregation, CA). The network device may configure or activate one or more secondary cells (secondary cell, SCell) for the terminal device, and the terminal device may transmit data through one or more of the primary cell and the secondary cells.

It should be noted that the roles of the primary cell and the secondary cell are for the terminal device. A cell 1 and a cell 2 are used as an example. For a terminal device A, the primary cell is the cell 1, and the secondary cell is the cell 2. However, for a terminal device B, the primary cell may be the cell 2, and the secondary cell may be the cell 1.

Each cell may independently transmit a reference signal (such as an SSB) for the terminal device to perform initial access.

If the terminal device is required to transmit data through a plurality of cells, the primary cell may select a secondary cell for the terminal device, such that the terminal device can transmit data through the primary cell and the secondary cell. However, after a network energy saving (network energy saving, NES) feature is introduced, to save power, some cells may reduce transmission of reference signals, or do not transmit reference signals. In this case, the primary cell may independently determine a secondary cell, and configure or activate the secondary cell for the terminal device, as shown in FIG. 4.

Referring to FIG. 4, in Step S410, the primary cell indicates a secondary cell to the terminal device.

The primary cell indicating the secondary cell to the terminal device may include: configuring, by the primary cell, the secondary cell for the terminal device; or activating, by the primary cell, the secondary cell.

When configuring or activating the secondary cell, the primary cell may select, as the secondary cell, a cell co-located with the primary cell and/or a cell belonging to a same timing advance group (timing advance group, TAG) as the primary cell.

In Step S420, the primary cell allocates an uplink resource to the terminal device. The uplink resource is an uplink resource for the secondary cell, or the uplink resource is used for the terminal device to transmit uplink data to the secondary cell.

In Step S430, the terminal device transmits uplink data to the secondary cell by using the uplink resource.

The secondary cell may be a secondary cell that transmits no reference signal. In this case, the terminal device cannot obtain timing advance (timing advance, TA) by measuring a reference signal transmitted by the secondary cell. When performing data transmission, the terminal device may assume that a downlink subframe boundary of the secondary cell is aligned with a downlink subframe boundary of the primary cell, and an uplink transmission instant for the secondary cell is inferred based on the downlink subframe boundary of the primary cell.

In addition, the terminal device may further determine uplink transmission power with respect to the secondary cell based on a signal measurement result (such as path loss) obtained from the measurements performed on the primary cell.

According to the solution shown in FIG. 4, if the primary cell directly configures or activates the secondary cell for the terminal device, the configured or activated secondary cell may not be suitable for the terminal device. For example, a wireless signal strength of the secondary cell that is configured or activated by the primary cell for the terminal device is relatively low, which results in relatively poor performance of data transmission between the terminal device and the secondary cell.

To resolve the foregoing problem, the terminal device may measure a reference signal transmitted by one or more cells, to obtain a signal measurement result. The primary cell may configure or activate the secondary cell for the terminal device based on the signal measurement result. For example, the primary cell may select a cell corresponding to a relatively good signal measurement result, and configure this cell as the secondary cell for the terminal device. For another example, the primary cell may configure a plurality of candidate secondary cells for the terminal device, and then activate one or more of the plurality of candidate secondary cells based on signal measurement results.

However, as described above, to save power, some cells may not transmit reference signals. In this case, there is currently no clear specification on how these cells transmit reference signals.

The foregoing description is provided by merely using the selection of a secondary cell as an example. In another scenario, another cell (a cell other than the primary cell) may also be required to transmit the reference signal. For example, for a multi-beam scenario, when selecting a beam, the terminal device is required to measure a reference signal transmitted by a cell, so as to select a suitable beam to communicate with the cell.

For the foregoing problem, it is proposed in embodiments of the present application that the terminal device and/or the primary cell may trigger a first cell to transmit a reference signal, so as to provide a clear solution for the first cell to transmit the reference signal, so that the first cell only transmits the reference signal in a case in which the first cell is required to transmit the reference signal, thereby saving power.

With reference to FIG. 5, the following describes in detail a wireless communication method according to an embodiment of the present application.

Referring to FIG. 5, in Step S510, a terminal device receives a reference signal transmitted by a first cell. The transmitting of the reference signal is triggered by the terminal device and/or a primary cell. In some embodiments, the transmitting of the reference signal may be triggered by the terminal device. The terminal device may transmit a trigger message to the first cell, so as to trigger the first cell to transmit the reference signal. After receiving the trigger message, the first cell transmits the reference signal. In some other embodiments, the transmitting of the reference signal may be triggered by the primary cell. The primary cell may transmit a trigger message to the first cell, so as to trigger the first cell to transmit the reference signal. After receiving the trigger message, the first cell transmits the reference signal.

The primary cell may be a serving cell for the terminal device, and the primary cell may be a cell that is accessed for a first time by the terminal device after the terminal device accesses a network. The first cell may be any cell other than the primary cell. For example, the primary cell may be co-located with the first cell, and the communication between the primary cell and the first cell may be performed within a base station. For another example, the primary cell may not be co-located with the first cell, and the information exchange between the primary cell and the first cell may be performed through inter-base station communication. In some embodiments, the first cell and the primary cell may belong to a same TAG, or may belong to different TAGs. This is not specifically limited in embodiments of the present application.

A type of the reference signal is not specifically limited in embodiments of the present application. For example, the reference signal may include one or more of the following: an SSB, a CSI-RS, or a tracking reference signal (tracking reference signal, TRS).

In some embodiments, the first cell may transmit the reference signal on a first resource, or a transmission resource for the reference signal is a first resource. The first resource may include one or more of the following: a time resource, a frequency resource, or a beam.

A manner of determining the first resource is not specifically limited in embodiments of the present application. In an example, the first resource may be independently determined by the first cell. In another example, the first resource may be a pre-configured resource, and the pre-configured resource may be, for example, a resource specified in a protocol. In another example, the first resource may be determined based on first indication information. In some implementations, the first indication information may also be referred to as first configuration information. The following describes a manner of determining the first resource based on the first indication information.

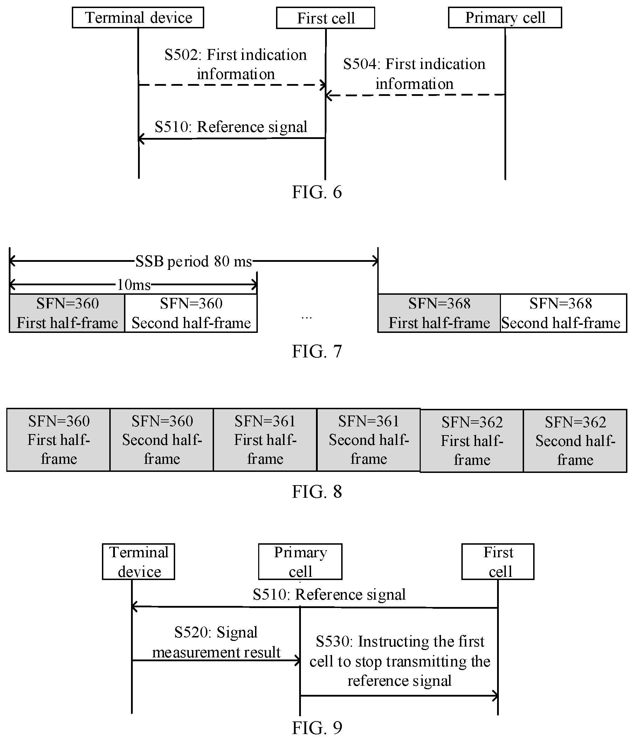

In some implementations, the first cell may determine the first resource based on the first indication information. The first indication information may be transmitted by the terminal device to the first cell, for example, as depicted in Step S502 in FIG. 6, or the first indication information may be transmitted by the primary cell to the first cell, for example, as depicted in Step S504 in FIG. 6. The first indication information is transmitted to the first cell to indicate the first resource, such that the first cell can accurately determine the resource for transmitting the reference signal, and transmit the reference signal on the corresponding first resource, so as to prevent the first cell from transmitting the reference signal blindly, thereby achieving the purpose of saving power.

For example, the first resource includes a time resource. The time resource may be determined based on one or more of the following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal. The foregoing information may be specified in a protocol, or may be indicated by the first indication information.

The reference signal may be transmitted periodically, or may be transmitted aperiodically. This is not specifically limited in embodiments of the present application. For a reference signal transmitted periodically, the first indication information may include a transmission period of the reference signal.

A start instant of transmitting the reference signal may refer to an instant at which the reference signal is transmitted for a first time. There is a plurality of manners of representing the start instant, which is not specifically limited in embodiments of the present application. In an example, the start instant may be an absolute instant. In another example, the start instant may alternatively be represented by a time unit. For example, the start instant may be represented by a frame number. For another example, the start instant may be represented by a subframe number. For another example, the start instant may be represented by a frame number + a subframe number.

The end instant of transmitting the reference signal may be an instant at which the reference signal is last transmitted. There is a plurality of manners of representing the end instant, which is not specifically limited in embodiments of the present application. In an example, the end instant may be an absolute instant. In another example, the end instant may alternatively be represented by a time unit. For example, the end instant may be represented by a frame number. For another example, the end instant may be represented by a subframe number. For another example, the end instant may be represented by a frame number + a subframe number.

The time unit may include one or more of the following: a system frame (or a radio frame), a half-frame, a subframe, a slot, a symbol, or the like. For example, the time unit is a radio frame, and in this case, the time unit in which the reference signal is located may refer to a radio frame (or a system frame number) in which the reference signal is located. The time unit in which the reference signal is located may be directly indicated by the first indication information, or the time unit in which the reference signal is located may be determined based on other information. For example, the time unit in which the reference signal is located may be determined based on the start instant of the reference signal and a period of the reference signal. For another example, the time unit in which the reference signal is located may be determined based on a period of the reference signal and a first rule. For another example, the time unit in which the reference signal is located may be determined based on a bitmap. The first indication information may include a bitmap, and the bitmap may indicate whether a reference signal is required to be transmitted in each time unit.

The location of the reference signal in the time unit may refer to a specific half-frame of the system frame in which the reference signal is located, for example, whether the reference signal is in a first half-frame or a second-half frame of the radio frame.

In some embodiments, the time resource may be determined based on the transmission period of the reference signal, the start instant of transmitting the reference signal, and the location of the reference signal in the time unit. Based on the foregoing information, the first cell may determine the time resource for transmitting the reference signal. For example, the time unit is a radio frame, and in this case, assuming that the transmission period of the reference signal is 80 ms, a system frame number SFN where the reference signal is transmitted for the first time is 360, and the reference signal should be transmitted in a first half-frame of the system frame, a time resource for transmitting the reference signal for the first time by the first cell is a first half-frame of a system frame with SFN = 360, a time resource for transmitting the reference signal for the second time is a first half-frame of a system frame with SFN = 368, and a time resource for transmitting the reference signal for the third time is a first half-frame of a system frame with SFN = 376, and so on, as shown in FIG. 7.

In some embodiments, the time resource may be determined based on the transmission period of the reference signal and the location of the reference signal in the time unit. Based on the foregoing information, the first cell may determine the time resource for transmitting the reference signal. If the first indication information does not indicate the start instant of transmitting the reference signal, or the start instant of transmitting the reference signal is not specified in a protocol, the first cell may determine, according to a preset rule, the start instant of transmitting the reference signal. For example, the time unit is a radio frame, and in this case, assuming that the transmission period of the reference signal is 80 ms, and the reference signal should be transmitted in a first half-frame of the system frame, the first cell may determine to transmit the reference signal in a system frame whose SFN satisfies SFN mod SSB period = 0. The first cell may use a nearest system frame whose SFN satisfies SFN mod SSB period = 0 as a start frame. For example, based on the foregoing information, the first cell may determine to transmit the reference signal in a first half-frame of each of system frames whose SFNs are 0, 8, 16, 24.... Assuming that a current SFN is 356, a next nearest occasion for transmitting the reference signal is a first half-frame of a system frame whose SFN is 364.

In some embodiments, the reference signal may not be transmitted periodically. In this case, the time unit in which the reference signal is located may be determined based on a bitmap. In some implementations, the time resource may be determined based on the start instant of transmitting the reference signal, the time unit in which the reference signal is located, and the location of the reference signal in the time unit. The first indication information includes the bitmap. The time unit in which the reference signal is located may be determined based on a start time unit for transmitting the reference signal and the bitmap. For example, the time unit is a radio frame, and in this case, assuming that a start system frame number SFN for transmitting the reference signal is 360, the reference signal shall be transmitted in a first half-frame of the system frame, and the bitmap is 11010110, the first cell may transmit the reference signal in a first half-frame of each of system frames whose SFNs are 360, 361, 363, 365, and 366. In some implementations, the bitmap may also be cyclically used. For example, the first cell may also transmit the reference signal in a first half-frame of each of system frames whose SFNs are 368, 369, 371, 373, and 374.

The foregoing description uses a first half-frame as an illustrative example, but the embodiments of the present application are not limited thereto. In an example, the first indication information may alternatively indicate that the reference signal is transmitted in a second half-frame of a system frame. In another example, the first indication information may alternatively indicate that the reference signal is transmitted in first half-frames of some system frames and second half-frames of some system frames. In still another example, the first indication information may alternatively indicate that the reference signal is transmitted in both a first half-frame and a second half-frame of a system frame. In this way, for a scenario in which the reference signal is transmitted for the purpose of obtaining a signal measurement result, reference signals are transmitted densely, such that the terminal device can obtain signal measurement results as soon as possible. The foregoing description is provided by using an example in which the first indication information indicates the location of the reference signal in the system frame. It may be understood that the location of the reference signal in the system frame may alternatively be specified in a protocol.

In some implementations, the time resource may include a first time period in which the first cell transmits the reference signal. In some implementations, the time resource may be determined based on the start instant of transmitting the reference signal, and the start instant of transmitting the reference signal may include, for example, a start time unit in which the reference signal is located. The first cell may transmit the reference signal throughout the time period following the start instant. For example, the first cell may transmit the reference signal in all half-frames starting from SFN = 360, as shown in FIG. 8.

In some implementations, the first indication information may not indicate the end instant of transmitting the reference signal, or the end instant of transmitting the reference signal is not specified in a protocol. Taking the first indication information as an example, the first indication information may indicate that the first cell transmits the reference signal starting from a first instant, but does not indicate the end instant of transmitting the reference signal. In this case, the primary cell may instruct, by using another message, the first cell to stop transmitting the reference signal. For example, the primary cell may transmit, to the first cell, indication information for instructing the first cell to stop transmitting the reference signal, as shown in Step S530 in FIG. 9. After receiving the indication information, the first cell stops transmitting the reference signal. For another example, the primary cell may transmit, to the first cell, indication information for indicating the end instant of transmitting the reference signal. After receiving the indication information, the first cell stops transmitting the reference signal when the end instant is reached.

Certainly, in some embodiments, the terminal device may instruct the first cell to stop transmitting the reference signal. For example, the terminal device may transmit, to the first cell, indication information for instructing the first cell to stop transmitting the reference signal. For another example, the terminal device may transmit, to the first cell, indication information for indicating the end instant of transmitting the reference signal. After receiving the indication information, the first cell stops transmitting the reference signal when the end instant is reached.

There is a plurality of manners of representing the end instant, which is not specifically limited in embodiments of the present application. In an example, the end instant may be an absolute instant. In another example, the end instant may alternatively be represented by a time unit. For example, the end instant may be represented by a frame number. For another example, the end instant may be represented by a subframe number. For another example, the end instant may be represented by a frame number + a subframe number.

In some implementations, the first resource may include a frequency resource. The first cell may transmit the reference signal on the frequency resource. In some embodiments, the frequency resource may be determined based on an absolute frequency value for transmitting the reference signal or a reference frequency for transmitting the reference signal.

For example, if the first indication information indicates the absolute frequency value for transmitting the reference signal, the first cell may determine the frequency resource based on the absolute frequency value. The absolute frequency value may be, for example, 786 MHz. Indicating the frequency resource by indicating the absolute frequency value is relatively simple to implement.

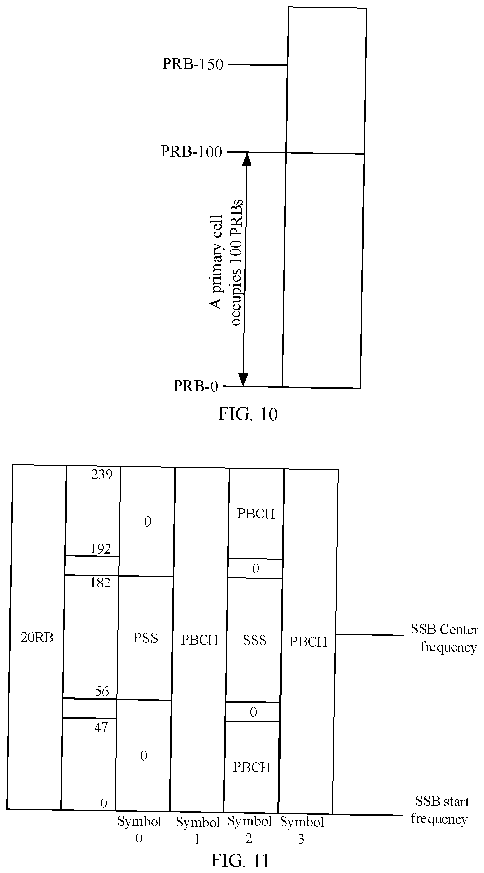

For another example, if the first indication information indicates the reference frequency for transmitting the reference signal, the first cell may determine the frequency resource based on the reference frequency. Indicating the frequency resource by indicating the reference frequency may reduce signalling overheads. The reference frequency may be a frequency corresponding to the first cell (that is, the frequency actually exists on the primary cell), or may not be a frequency corresponding to the first cell (that is, the frequency does not actually exist on the primary cell). This is not specifically limited in embodiments of the present application. By way of an example, the following description is provided with reference to FIG. 10.

Referring to FIG. 10, the primary cell occupies 100 physical resource blocks (physical resource block, PRB), and the PRBs are numbered from 1 to 100. The first indication information may instruct the first cell to transmit the reference signal on the PRB 150, or the first indication information may instruct the first cell to transmit the reference signal on the PRB 50.

In some implementations, the reference frequency may be a start frequency of the reference signal, or may be a center frequency of the reference signal, or may be an end frequency of the reference signal. As illustrated in FIG. 11, which uses an SSB as the reference signal for illustrative purposes only, the reference frequency indicated with the first indication information may be a start frequency of the SSB, or may be a center frequency of the SSB.

If the reference frequency is a start frequency of the reference signal, the first cell may determine an end frequency based on a sum of the start frequency and a first offset. If the reference frequency is a center frequency of the reference signal, the first cell may determine a start frequency based on a difference between the center frequency and a second offset, and determine an end frequency based on a sum of the center frequency and the second offset.

In some implementations, the first cell may transmit a response message to the terminal device or the primary cell after receiving the first indication information. For example, the primary cell transmits the first indication information to the first cell. In this case, after receiving the first indication information transmitted by the primary cell, the first cell may transmit a response message to the primary cell. In some embodiments, the response message may include acknowledgment information. For example, if the first cell agrees to transmit the reference signal by using the resource indicated in the first indication information, the response message may include acknowledgment information. In some embodiments, if the first cell does not agree to transmit the reference signal by using the resource indicated in the first indication information, but transmits the reference signal by using another resource, the first cell may indicate an updated resource to the primary cell by using a response message. If the first cell updates the transmission resource for the reference signal, an actual transmission resource shall be subject to the updated resource.

Certainly, in some embodiments, after receiving the first indication information, the first cell may not transmit a response message. If the first cell does not transmit a response message, the primary cell may consider by default that the first cell is to transmit the reference signal by using the first resource indicated by the first indication information.

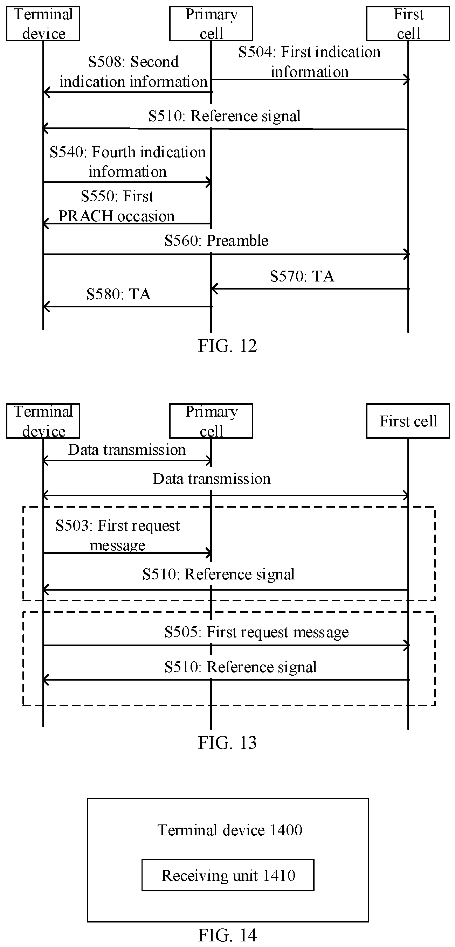

In some implementations, if the transmitting of the reference signal is triggered by the primary cell, the primary cell may further transmit, to the terminal device, second indication information for indicating a second resource, as shown in Step S508 in FIG. 12. The second resource is used for receiving the reference signal transmitted by the first cell, that is, the terminal device may receive, by using the second resource, the reference signal transmitted by the first cell.

In some implementations, the second resource may include a time resource and/or a frequency resource. If the second resource includes a time resource, the second indication information may be used to indicate one or more of the following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal. In some implementations, a manner in which the second indication information indicates the foregoing information may be the same as a manner in which the first indication information indicates the foregoing information. For brevity, details are not described herein again.

It may be understood that for the terminal device, the transmission period of the reference signal may be understood as a receiving period of the reference signal, the start instant of transmitting the reference signal may be understood as a start instant of receiving the reference signal, the end instant of transmitting the reference signal may be understood as an end instant of receiving the reference signal, and the quantity of times of transmitting the reference signal may be understood as a quantity of times of receiving the reference signal.

In some embodiments, the second resource may be the same as the first resource, or the second resource may be different from the first resource. For example, the second resource may be a subset of the first resource. For example, if the primary cell instructs the first cell to transmit the reference signal starting from SFN = 360, and when the primary cell transmits the second indication information to the terminal device, the SFN has exceeded 360 already, and the primary cell may instruct the terminal device to receive (or measure) the reference signal immediately, instead of instructing the terminal device to receive the reference signal starting from SFN = 360.

In some implementations, the primary cell may not indicate the second resource to the terminal device. If the primary cell does not transmit the second indication information to the terminal device, or the primary cell does not indicate the second resource to the terminal device, the terminal device may receive, according to a default rule, the reference signal transmitted by the first cell. The default rule may include, for example, a cell search rule for initial access. The default rule may include, for example, a period of 20 ms, and the terminal device may receive and measure, every 20 ms, the reference signal transmitted by the first cell.

A manner of carrying the second indication information is not specifically limited in embodiments of the present application. For example, the second indication information may be carried in a radio resource control (radio resource control, RRC) message, that is, the primary cell may transmit the second indication information to the terminal device by using the RRC message. For another example, the second indication information may be carried in a medium access control control element (media access control control element, MAC CE), that is, the primary cell may transmit the second indication information to the terminal device by using the MAC CE.

In some implementations, the primary cell may transmit third indication information to the terminal device. The third indication information is used to instruct the terminal device to measure the reference signal transmitted by the first cell. After receiving the third indication information, the terminal device may receive the reference signal transmitted by the first cell, and measure the reference signal.

A manner of carrying the third indication information is not specifically limited in embodiments of the present application. For example, the third indication information may be carried in an RRC message, that is, the primary cell may transmit the third indication information to the terminal device by using the RRC message. For another example, the third indication information may be carried in a MAC CE, that is, the primary cell may transmit the third indication information to the terminal device by using the MAC CE.

In some implementations, the primary cell may instruct, by using one piece of indication information, the terminal device to measure a reference signal from a single cell, or may instruct, by using one piece of indication information, the terminal device to measure reference signals from a plurality of cells. In some implementations, the primary cell may indicate a reference signal measurement rule for the plurality of cells to the terminal device by using an RRC message, and then instruct, by using a MAC CE, the terminal device to measure a reference signal from one or more cells. The measurement rule may include a resource for measuring the reference signal. In some implementations, the primary cell may not only instruct, by using the third indication information, the terminal device to measure the reference signal transmitted by the first cell, but also instruct the terminal device to measure a reference signal transmitted by another cell (such as a second cell). In some implementations, the primary cell may not only indicate, by using the second indication information, a resource for the first cell to transmit the reference signal, but also indicate a resource for another cell (such as the second cell) to transmit the reference signal.

In some implementations, the second indication information and the third indication information are the same indication information, that is, the primary cell may use one piece of indication information to instruct the terminal device to measure the reference signal from the first cell, and also to indicate, to the terminal device, the second resource for receiving the reference signal.

In some implementations, if a radio frequency system of the terminal device supports simultaneous measurement of a plurality of cells, the terminal device may simultaneously measure reference signals transmitted by the plurality of cells, or may measure, in different time periods, respective reference signals transmitted by the plurality of cells. Whether the terminal device simultaneously measures reference signals transmitted by the plurality of cells may be indicated by the primary cell, or may be independently determined by the terminal device. If the radio frequency system of the terminal device does not support simultaneous measurement of a plurality of cells, the terminal device may measure, in different time periods, respective reference signals transmitted by the plurality of cells.

If the radio frequency system of the terminal device does not support simultaneous measurement on reference signals transmitted by a plurality of cells, the primary cell can only configure the terminal device to measure, in different time periods, the respective reference signals transmitted by the plurality of cells. For example, it is assumed that the primary cell configures the terminal device to measure, in different time periods, respective reference signals transmitted by a cell 1 and a cell 2. In this case, the terminal device may support carrier aggregation between the primary cell and the cell 1 or carrier aggregation between the primary cell and the cell 2, but does not support carrier aggregation between the primary cell, the cell 1, and the cell 2.

The terminal device obtains a signal measurement result after measuring the reference signal. The signal measurement result may also be referred to as a measurement report. The terminal device may transmit (or report) the signal measurement result to the primary cell. In some embodiments, the signal measurement result may be used for the primary cell to select a secondary cell for the terminal device. In the solution described above, when the terminal device is required to transmit data through the primary cell and the secondary cell, the primary cell may select the secondary cell for the terminal device. However, in a conventional solution, since the secondary cell transmits no measurement reference signal, the secondary cell is blindly selected by the primary cell without considering the signal measurement result, which may result in relatively poor performance of data transmission between the terminal device and the secondary cell. In the solution in embodiments of the present application, the first cell is triggered to transmit the reference signal. The terminal device may report the signal measurement result for the first cell to the primary cell. The primary cell may select the secondary cell for the terminal device based on the signal measurement result. In this way, performance of data transmission between the terminal device and the secondary cell may be ensured. For a scenario in which the primary cell is required to select the secondary cell for the terminal device based on the signal measurement result, or the primary cell is required to determine, based on the signal measurement result, whether the first cell is required to stop transmitting the reference signal, regardless of the signal measurement result, the terminal device is required to transmit the signal measurement result.

The signal measurement result may include one or more of the following: reference signal received power (reference signal receiving power, L1-RSRP), reference signal received quality (reference signal receiving quality, RSRQ), or received signal strength indicator (received signal strength indicator, RSSI).

Timing of transmitting the signal measurement result may be independently determined by the terminal device, or may be determined by the primary cell. The timing for the terminal device to transmit the signal measurement result is not specifically limited in embodiments of the present application. In an example, the terminal device may transmit the signal measurement result to the primary cell upon obtaining the signal measurement result. In another example, the terminal device may transmit the signal measurement result to the primary cell in a case in which a first condition is satisfied. The following describes the first condition.

In some implementations, the first condition may be related to measurement duration. The measurement duration may be duration during which the terminal device measures the reference signal. In some embodiments, duration during which the terminal device measures the reference signal may also be understood as duration during which the terminal device receives the reference signal. In some implementations, the first condition may include the measurement duration being greater than or equal to first duration. For example, if the measurement duration is greater than or equal to the first duration, the terminal device may transmit the signal measurement result to the primary cell. The first duration may be predefined in a protocol, or may be indicated by the primary cell to the terminal device, or may be independently determined by the terminal device. For example, the primary cell may instruct the terminal device to report the signal measurement result after the first duration. The first duration is set, such that the terminal device can report the signal measurement result in a timely manner, so that the primary cell selects an appropriate secondary cell for the terminal device, thereby reducing a data transmission delay of the terminal device.

An instant at which the measurement duration starts counting is not specifically limited in embodiments of the present application. For example, if the primary cell transmits the third indication information by using an RRC message, the measurement duration starts counting from an instant at which the RRC message is received. For another example, if the primary cell transmits the third indication information by using a MAC CE, the measurement duration starts counting from an instant at which the MAC CE is received. For another example, if the primary cell configures a measurement rule for a plurality of cells by using an RRC message, and instructs, by using a MAC CE, the terminal device to start to measure the reference signal transmitted by the first cell, the measurement duration starts counting from an instant at which the MAC CE is received.

In some implementations, the first condition may be related to a signal measurement result. In some implementations, the first condition may include the signal measurement result being greater than or equal to a first threshold. The first threshold may be predefined in a protocol, or may be indicated by the primary cell to the terminal device, or may be independently determined by the terminal device. In a case in which the signal measurement result is greater than or equal to the first threshold, the terminal device reports the signal measurement result, such that the primary cell can learn a cell with a better signal measurement result as soon as possible, thereby configuring or activating a secondary cell for the terminal device as soon as possible, and reducing a data transmission delay of the terminal device.

The first conditions described above may be implemented separately or in combination with each other, which is not specifically limited in embodiments of the present application. For example, if the signal measurement result is greater than or equal to the first threshold, the terminal device may transmit the signal measurement result. For another example, if the signal measurement result is always less than the first threshold, for example, if the signal measurement result is still less than the first threshold when the measurement duration has reached the first duration, the terminal device may still transmit the signal measurement result.

In some implementations, the primary cell may further transmit indication information to the first cell, so as to instruct the first cell to stop transmitting the reference signal. For example, if the first indication information does not indicate an instant of stopping transmitting the reference signal, the primary cell may further transmit the indication information to the first cell, so as to instruct the first cell to stop transmitting the reference signal. If the first indication information has indicated an instant of stopping transmitting the reference signal, the primary cell may not transmit the indication information to the first cell, so as to instruct the first cell to stop transmitting the reference signal. Certainly, in some embodiments, if the first indication information has indicated an instant of stopping transmitting the reference signal, the primary cell may further transmit the indication information to the first cell, such that the first cell stops transmitting the reference signal in advance.

The timing for the primary cell to instruct the first cell to stop transmitting the reference signal is not specifically limited in embodiments of the present application. For example, if the primary cell instructs a plurality of terminal devices to measure the reference signal transmitted by the first cell, the primary cell may instruct the first cell to stop transmitting the reference signal after the plurality of terminal devices each obtain signal measurement results. For another example, the primary cell may instruct the first cell to stop transmitting the reference signal in a case in which signal measurement duration of the terminal device is greater than or equal to a preset threshold.

In some scenarios, after configuring the first cell as the secondary cell, the primary cell may also be required to trigger the first cell to transmit the reference signal. For example, the primary cell and the first cell may not belong to a same TAG, that is, TA corresponding to the primary cell is different from TA corresponding to the first cell. In this case, the first cell is required to transmit the reference signal, so that the terminal device performs random access, so as to obtain the TA. For another example, after configuring the first cell as the secondary cell, the primary cell does not activate the secondary cell. When service data traffic of the terminal device increases, the primary cell intends to activate the secondary cell, such that the terminal device can transmit data through the secondary cell. In this case, the first cell is required to transmit the reference signal for the terminal device to perform signal measurement. The primary cell may instruct the first cell to transmit the reference signal, and a manner in which the primary cell instructs the first cell to transmit the reference signal is similar to the manner described above. For brevity, details are not described herein again. The following describes only behavior of the terminal device after receiving the reference signal.

As described above, in some communications systems, the first cell may support multi-beam transmission. In this case, the first cell may transmit reference signals by using a plurality of beams, or reference signals may be transmitted by using a plurality of beams. The terminal device may measure the reference signals transmitted on the plurality of beams, and the terminal device may determine a target beam based on signal measurement results, or a target beam may be determined based on signal measurement results of the reference signals carried on the plurality of beams. The target beam may be a beam with a better signal measurement result. For example, the target beam may be a beam with a best signal measurement result in the plurality of beams, for example, the target beam may be a beam with a strongest signal strength in the plurality of beams. For another example, the target beam may be a beam with a signal measurement result greater than or equal to a preset threshold in the plurality of beams. The target beam may include one or more beams. This is not specifically limited in embodiments of the present application.

In some implementations, the terminal device may transmit fourth indication information to the primary cell. The fourth indication information is used to indicate the target beam in the plurality of beams, as shown in Step S540 in FIG. 12.

A manner of indicating the target beam by the fourth indication information is not specifically limited in embodiments of the present application. For example, the fourth indication information may indicate an index of the target beam. For another example, the fourth indication information may indicate an index of the reference signal (for example, an index of an SSB), and the target beam may be determined based on the index of the SSB. For another example, the fourth indication information may indicate an index of a resource for the reference signal, and the target beam may be determined based on the index of the resource for the reference signal.

A manner of carrying the fourth indication information is not specifically limited in embodiments of the present application. For example, the fourth indication information may be carried in an RRC message, or the fourth indication information may be carried in a MAC CE, or the fourth indication information may be carried in uplink control information (uplink control information, UCI), or the fourth indication information may be carried in a physical uplink control channel (physical uplink control channel, PUCCH).

The target beam may be used for random access, for example, the target beam may be used for the terminal device to transmit a preamble. Through the random access, the terminal device may achieve uplink synchronization with the first cell. For example, in some scenarios, the primary cell and the first cell may not belong to a same TAG, that is, TA corresponding to the primary cell is different from TA corresponding to the first cell. Therefore, when the terminal device is required to transmit data through the primary cell and the first cell, it is required to obtain the TA corresponding to the first cell, so as to transmit the data to the first cell. In the scenario described above, the terminal device may obtain, through a random access procedure, the TA corresponding to the first cell.

In some implementations, the primary cell may determine a first physical random access channel (physical random access channel, PRACH) occasion based on the target beam. The primary cell may indicate the first PRACH occasion to the terminal device, as shown in Step S550 in FIG. 12. The first PRACH occasion may be used for the terminal device to transmit a preamble. Alternatively, the terminal device may transmit the preamble on the first PRACH occasion, as shown in Step S560 in FIG. 12. The first PRACH occasion may be a PRACH occasion for the first cell, and the terminal device may transmit a preamble to the first cell on the first PRACH occasion.

There is a plurality of manners of determining the first PRACH occasion, which is not specifically limited in embodiments of the present application. In an example, the primary cell may independently determine the first PRACH occasion, or the primary cell may randomly determine the first PRACH occasion. For example, if the primary cell cannot obtain a correspondence between beams of the first cell and PRACH occasions, the primary cell may independently determine the first PRACH occasion.

In another example, the primary cell may determine the first PRACH occasion based on a correspondence between the beams of the first cell and the PRACH occasions. The first PRACH occasion may be a PRACH occasion corresponding to the target beam. The correspondence between the beams of the first cell and the PRACH occasions may be indicated by the first cell to the primary cell.

In some implementations, if the first PRACH occasion is independently determined by the primary cell, the primary cell may further transmit indication information to the first cell to indicate the first PRACH occasion and the target beam. Based on the indication information, the first cell may adjust, on the first PRACH occasion, a receive antenna to match the target beam, thereby achieving an optimal receiving effect.

In some implementations, the primary cell may transmit fifth indication information to the terminal device. The fifth indication information may be used to indicate the first PRACH occasion. The terminal device may transmit a preamble to the first cell on the first PRACH occasion.

In some implementations, after receiving the preamble transmitted by the terminal device, the first cell may measure the TA. The first cell may transmit the TA to the terminal device. After obtaining the TA, the terminal device may implement uplink synchronization with the first cell. The first cell transmitting the TA to the terminal device may mean that the first cell directly transmits the TA to the terminal device, or the first cell transmits the TA to the terminal device through the primary cell. For example, for a scenario in which the first cell is only used for uplink reception, the first cell is not used for downlink transmission, that is, does not transmit any downlink signal. The first cell may not be provided with a downlink PDCCH configuration. In this case, the first cell may transmit the TA through the primary cell. As shown in FIG. 12, in Step S570, the first cell may transmit the TA to the primary cell. In Step S580, after receiving the TA transmitted by the first cell, the primary cell may forward the TA of the first cell to the terminal device.

In the solution described above, the transmitting of the reference signal may be triggered by the primary cell, that is, the primary cell transmits the first indication information to the first cell, so as to instruct the first cell to transmit the reference signal. The following describes a solution in which the reference signal is triggered by the terminal device.

In some scenarios, after having started data transmission with the first cell, the terminal device may still be required to measure the reference signal transmitted by the first cell, for example, when signal quality of the first cell changes, or when the TA of the first cell changes. If the signal quality of the first cell changes, the terminal device may re-determine an appropriate beam by measuring the reference signal. If the TA of the first cell changes, the terminal device may determine an uplink transmission instant by receiving the reference signal and using the reference signal as a reference. For example, the terminal device may determine downlink subframe boundary information based on an instant at which the reference signal is received, and then determine the uplink transmission instant based on the downlink subframe boundary information.

In some implementations, the terminal device may transmit a first request message. The first request message is used to request the first cell to transmit the reference signal. The first request message may be transmitted by the terminal device to the primary cell, or the first request message may be transmitted by the terminal device to the first cell. For example, with reference to Step S503 in FIG. 13, the terminal device may transmit the first request message to the primary cell to request the first cell to transmit the reference signal. The first request message is transmitted to the primary cell, such that a manner of carrying the first request message is more flexible. For example, the first request message may be carried in a PUCCH (for example, a special scheduling request (scheduling request, SR)), because only the primary cell may have a PUCCH. For another example, with reference to Step S505 in FIG. 13, the terminal device may transmit the first request message to the first cell to request the first cell to transmit the reference signal. The first request message is directly transmitted to the first cell, such that it may be unnecessary for the terminal device to indicate, in the first request message, a cell that is required to transmit the reference signal, thereby reducing signalling overheads. If the first cell is co-located with the primary cell, it may be considered that there is no communication delay between the first cell and the primary cell, and no communication delay may occur due to the transmission of the first request message from the terminal device to the primary cell when requesting reference signal transmission from the first cell.

In some implementations, if a plurality of cells are required to transmit the reference signal, the terminal device may transmit the first request message to the first cell, so as to instruct the first cell and another cell to transmit the reference signal. For example, the terminal device may transmit the first request message to the first cell, so as to request a second cell to transmit the reference signal.

A manner of carrying the first request message is not specifically limited in embodiments of the present application. For example, the first request message may be carried in an RRC message, or the first request message may be carried in a MAC CE, or the first request message may be carried in UCI, or the first request message may be carried in a PUCCH.

In some implementations, if the terminal device transmits the first request message to the primary cell, the first request message may include sixth indication information. The sixth indication information is used to indicate a cell that is required to transmit the reference signal. The cell that is required to transmit the reference signal may include the first cell. Based on the sixth indication information, the primary cell may determine which cells are required to transmit the reference signal, and trigger a corresponding cell to transmit the reference signal. The cell that is required to transmit the reference signal may include one or more cells. This is not specifically limited in embodiments of the present application. The cell that is required to transmit the reference signal may include a cell that has no reference signal (for example, a cell that has no SSB). A cell that has no reference signal may be configured by a network device for the terminal device. In some implementations, if the cell that is required to transmit the reference signal includes a plurality of cells, the first request message includes the sixth indication information. If there is only one cell that is required to transmit the reference signal, the first request message may not include the sixth indication information, so as to reduce signalling overheads.

In some embodiments, the terminal device may instruct, by using the first request message, one cell to transmit the reference signal, or a plurality of cells to transmit the reference signal.

There is a plurality of manners of indicating the sixth indication information, which is not specifically limited in embodiments of the present application. In an example, the sixth indication information may include an identifier or an index of a cell. For example, the terminal device may directly indicate an index (index) of the first cell by using a MAC CE. In another example, the sixth indication information may include a bitmap, and each bit corresponds to one cell. A value of a bit may indicate whether a corresponding cell is required to transmit the reference signal. For example, if a value of a bit is 1, it indicates that the reference signal is required to be transmitted. If a value of the bit is 0, it indicates that the reference signal is not required to be transmitted.

In some implementations, when the terminal device transmits the first request message, the terminal device may have performed data transmission with the first cell. Therefore, the terminal device may have learned statues of some or all of beams of the first cell. For example, the terminal device may determine which beam(s) of the first cell have better signal transmission quality. In this case, the terminal device may indicate the target beam to the first cell. That is, the first request message may be used to indicate the target beam. The target beam may include one or more beams. The target beam is indicated to the first cell, such that the first cell may transmit the reference signal only on some beams (for example, the first cell may transmit only a part of an SSB set), thereby reducing power consumption of the first cell.

In some implementations, the first indication information may be carried in the first request message. Certainly, the first indication information may alternatively be carried in another message, which is not specifically limited in embodiments of the present application.

In some implementations, a parameter for the first cell to transmit the reference signal may be a pre-configured parameter. After the first cell receives the first request message, the first cell may transmit the reference signal based on the pre-configured parameter. The pre-configured parameter may include one or more of the following: a frequency of transmitting the reference signal, a location of the reference signal in a time unit, a time unit in which the reference signal is located, duration of a time period for transmitting the reference signal, a quantity of times of transmitting the reference signal, or a transmit power of the reference signal. In this case, the first request message may indicate only whether the first cell transmits the reference signal, but does not carry other information.

In some implementations, the parameter used for the first cell to transmit the reference signal may not be a pre-configured parameter. The terminal device indicates, to the first cell by using the first request message, the parameter used for transmitting the reference signal. For example, the first request message may include an index of the reference signal, duration for transmitting the reference signal, and the like.

In some implementations, among parameters used for transmitting the reference signal, some parameters are pre-configured parameters, and some parameters are indicated by the first request message. For example, the index of the reference signal and the duration for transmitting the reference signal may be indicated by the first request message.

In some implementations, the terminal device may transmit the first request message in a case in which a second condition is satisfied. The second condition may be related to one or more of the following: a signal measurement result for the first cell, or synchronization between the terminal device and the first cell.

In some embodiments, the second condition may include the signal measurement result for the first cell being less than or equal to a second threshold. That is, the terminal device may transmit the first request message in a case in which signal quality of the first cell is relatively poor.

In some embodiments, the second condition may involve a change in TA for the first cell. That is, the terminal device may transmit the first request message in a case in which the TA for the first cell changes. The TA for the first cell changing may include the terminal device being unable to determine the downlink subframe boundary information of the first cell. For example, if the terminal device cannot determine the downlink subframe boundary information of the first cell, the terminal device may transmit the first request message.

In some implementations, in a case in which a third condition is satisfied, the terminal device cannot determine the downlink subframe boundary information of the first cell. The third condition includes a time interval between a current instant and a first instant being greater than or equal to a third threshold. The first instant is an instant of last data transmission between the terminal device and the first cell. That is, if there has been no data transmission between the terminal device and the first cell for a long period of time, the terminal device may not be able to determine a downlink subframe boundary of the first cell.

The instant of the last data transmission may be an instant of last uplink data transmission or an instant of last downlink data transmission.

In some implementations, after transmitting the first request message, the terminal device may receive, after second duration, the reference signal transmitted by the first cell. The second duration may be duration predefined in a protocol, or the second duration may be configured by the primary cell.

The foregoing describes in detail the method embodiments of the present application with reference to FIG. 1 to FIG. 13. The following describes in detail apparatus embodiments of the present application with reference to FIG. 14 to FIG. 15. It should be understood that the descriptions of the method embodiments correspond to descriptions of the apparatus embodiments, and therefore, for parts that are not described in detail, reference may be made to the foregoing method embodiments.

FIG. 14 is a schematic block diagram of a terminal device according to an embodiment of the present application. The terminal device 1400 shown in FIG. 14 may be any type of terminal device described above. The terminal device 1400 shown in FIG. 14 may include a receiving unit 1410.

The receiving unit 1410 is configured to receive a reference signal transmitted by a first cell, where the transmitting of the reference signal is triggered by the terminal device and/or a primary cell.

In some possible implementations, a transmission resource for the reference signal is a first resource, and the first resource is determined based on first indication information, or the first resource is a pre-configured resource.

In some possible implementations, the first indication information is transmitted by the terminal device and/or the primary cell to the first cell.

In some possible implementations, the first resource includes one or more of the following: a time resource, a frequency resource, or a beam.

In some possible implementations, the first resource includes a time resource, and the time resource is determined based on one or more of the following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

In some possible implementations, the first resource includes a frequency resource, and the frequency resource is determined based on an absolute frequency value for transmitting the reference signal or a reference frequency for transmitting the reference signal.

In some possible implementations, the transmitting of the reference signal is triggered by the primary cell, and the receiving unit is further configured to: receive second indication information transmitted by the primary cell, where the second indication information is used to indicate a second resource, and the second resource is used for receiving the reference signal transmitted by the first cell.

In some possible implementations, the second resource includes a time resource and/or a frequency resource.

In some possible implementations, the second resource includes a time resource, and the second indication information is used to indicate one or more of the following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

In some possible implementations, the second resource includes a frequency resource, and the second configuration information includes an absolute frequency value for transmitting the reference signal or a reference frequency for transmitting the reference signal.

In some possible implementations, the time unit includes a system frame.

In some possible implementations, the system frame is a system frame number of the primary cell.

In some possible implementations, the reference frequency is one of the following: a start frequency, a center frequency, or an end frequency.

In some possible implementations, the receiving unit is further configured to: receive third indication information transmitted by the primary cell, where the third indication information is used to instruct the terminal device to measure the reference signal transmitted by the first cell.

In some possible implementations, the terminal device further includes: a transmitting unit, transmitting a signal measurement result of the reference signal to the primary cell in a case in which a first condition is satisfied, where the first condition is related to measurement duration and/or the signal measurement result.

In some possible implementations, the first condition includes one or more of the following: the measurement duration is greater than or equal to first duration; or the signal measurement result is greater than or equal to a first threshold.

In some possible implementations, the reference signal is transmitted by using a plurality of beams, and the terminal device further includes a transmitting unit, transmitting fourth indication information to the primary cell, where the fourth indication information is used to indicate a target beam in the plurality of beams, and the target beam is a beam with an optimal signal measurement result in the plurality of beams.

In some possible implementations, the receiving unit is further configured to: receive fifth indication information transmitted by the primary cell, where the fifth indication information is used to indicate a first PRACH occasion; and the transmitting unit is further configured to transmit a preamble to the first cell on the first PRACH occasion.

In some possible implementations, the transmitting of the reference signal is triggered by the terminal device, and the terminal device further includes a transmitting unit, transmitting a first request message, where the first request message is used for requesting the first cell to transmit the reference signal, and the first request message is transmitted by the terminal device to the primary cell, or the first request message is transmitted by the terminal device to the first cell.

In some possible implementations, the first request message includes sixth indication information, the sixth indication information is used to indicate a cell that is required to transmit the reference signal, and the cell that is required to transmit the reference signal includes the first cell.

In some possible implementations, the transmitting unit is further configured to: transmit the first request message in a case in which a second condition is satisfied, where the second condition includes one or more of the following: a signal measurement result for the first cell is less than or equal to a second threshold; or the terminal device is unable to determine downlink subframe boundary information of the first cell.

In some possible implementations, in a case in which a third condition is satisfied, the terminal device is unable to determine the downlink subframe boundary information of the first cell, and the third condition includes: a time interval between a current instant and a first instant is greater than or equal to a third threshold, where the first instant is an instant of last data transmission between the terminal device and the first cell.

In some possible implementations, the reference signal includes one or more of the following: an SSB, a CSI-RS, or a TRS.

In some possible implementations, the primary cell is co-located with the first cell.

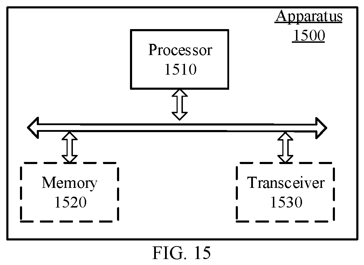

In an optional embodiment, the receiving unit 1410 and the transmitting unit may be implemented a transceiver 1530. The terminal device 1400 may further include a processor 1510 and a memory 1520, which are specifically shown in FIG. 15.

FIG. 15 is a schematic structural diagram of a communications apparatus according to an embodiment of the present application. Dashed lines in FIG. 15 indicate that units or modules are optional. The apparatus 1500 may be configured to implement the method described in the foregoing method embodiments. The apparatus 1500 may be a chip, a terminal device, or a network device.

The apparatus 1500 may include one or more processors 1510. The processor 1510 may allow the apparatus 1500 to implement the method described in the foregoing method embodiments. The processor 1510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program, and the program may be executed by the processor 1510, so that the processor 1510 executes the method described in the foregoing method embodiments. The memory 1520 may be separate from the processor 1510 or may be integrated into the processor 1510.

The apparatus 1500 may further include a transceiver 1530. The processor 1510 may communicate with another device or chip by using the transceiver 1530. For example, the processor 1510 may transmit data to and receive data from the another device or chip through the transceiver 1530.

An embodiment of the present application further provides a computer-readable storage medium, storing a program. The computer-readable storage medium may be applied to the terminal or the network device provided in the embodiments of the present application, and the program causes a computer to perform the methods performed by the terminal or the network device in various embodiments of the present application.

An embodiment of the present application further provides a computer program product. The computer program product includes a program. The computer program product may be applied to the terminal or the network device provided in the embodiments of the present application, and the program causes a computer to perform the methods performed by the terminal or the network device in various embodiments of the present application.

An embodiment of the present application further provides a computer program. The computer program may be applied to a terminal or a network device provided in embodiments of the present application, and the computer program causes a computer to execute the methods performed by the terminal or the network device in various embodiments of the present application.

It should be understood that the terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and accompanying drawings of the present application are used for distinguishing different objects from each other, rather than defining a specific order. In addition, the terms "include" and "have" and any variations thereof are intended to cover a non-exclusive inclusion.

In embodiments of the present application, "indication" mentioned herein may refer to a direct indication, or may refer to an indirect indication, or may mean that there is an association relationship. For example, A indicates B, which may mean that A directly indicates B, for example, B may be obtained by using A; or may mean that A indirectly indicates B, for example, A indicates C, and B may be obtained by using C; or may mean that there is an association relationship between A and B.

In embodiments of the present application, "B corresponding to A" means that B is associated with A, and B may be determined based on A. However, it should be further understood that, determining B based on A does not mean determining B based only on A, but instead, B may be determined based on A and/or other information.

In embodiments of the present application, the term "correspond" may mean that there is a direct or indirect correspondence between the two, or may mean that there is an association relationship between the two, or may mean that there is a relationship such as indicating and being indicated, or configuring and being configured.

In embodiments of the present application, "predefined" or "pre-configured" may be implemented by pre-storing corresponding code, tables, or other forms that may be used to indicate related information in devices (for example, including a terminal device and a network device), and a specific implementation thereof is not limited in the present application. For example, predefined may indicate being defined in a protocol.

In embodiments of the present application, the "protocol" may indicate a standard protocol in the communications field, which may include, for example, an LTE protocol, an NR protocol, and a related protocol applied to a future communications system. This is not limited in the present application.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of the present application, sequence numbers of the foregoing processes do not mean execution sequences. The execution sequences of the processes should be determined according to functions and internal logic of the processes, and should not be construed as any limitation on the implementation processes of embodiments of the present application.

In several embodiments provided in the present application, it should be understood that the disclosed system, apparatus, and method may be implemented in another manner. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual needs to achieve the objective of the solutions of embodiments.

In addition, function units in embodiments of the present application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A wireless communication method, comprising:
receiving, by a terminal device, a reference signal transmitted by a first cell, wherein the transmitting of the reference signal is triggered by the terminal device and/or a primary cell.

2. The method according to claim 1, wherein a transmission resource for the reference signal is a first resource, and the first resource is determined based on first indication information, or the first resource is a pre-configured resource.

3. The method according to claim 2, wherein the first indication information is transmitted by the terminal device and/or the primary cell to the first cell.

4. The method according to claim 2 or 3, wherein the first resource comprises one or more of following: a time resource, a frequency resource, or a beam.

5. The method according to claim 4, wherein the first resource comprises a time resource, and the time resource is determined based on one or more of following: the first indication information is used to indicate one or more of following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

6. The method according to claim 4, wherein the first resource comprises a frequency resource, and the frequency resource is determined based on an absolute frequency value for transmitting the reference signal or a reference frequency for transmitting the reference signal.

7. The method according to any one of claims 1 to 6, wherein the transmitting of the reference signal is triggered by the primary cell, and the method further comprises:
receiving, by the terminal device, second indication information transmitted by the primary cell, wherein the second indication information is used to indicate a second resource, and the second resource is used for receiving the reference signal transmitted by the first cell.

8. The method according to claim 7, wherein the second resource comprises a time resource and/or a frequency resource.

9. The method according to claim 8, wherein the second resource comprises a time resource, and the second indication information is used to indicate one or more of following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

10. The method according to claim 8, wherein the second resource comprises a frequency resource, and the second configuration information comprises an absolute frequency value for transmitting the reference signal or a reference frequency for transmitting the reference signal.

11. The method according to claim 5 or 9, wherein the time unit comprises a system frame.

12. The method according to claim 11, wherein the system frame is a system frame number of the primary cell.

13. The method according to claim 6 or 10, wherein the reference frequency is one of following: a start frequency, a center frequency, or an end frequency.

14. The method according to any one of claims 7 to 10, further comprising:
receiving, by the terminal device, third indication information transmitted by the primary cell, wherein the third indication information is used to instruct the terminal device to measure the reference signal transmitted by the first cell.

15. The method according to any one of claims 1 to 14, further comprising:
transmitting, by the terminal device, a signal measurement result of the reference signal to the primary cell in a case in which a first condition is satisfied, wherein the first condition is related to measurement duration and/or the signal measurement result.

16. The method according to claim 15, wherein the first condition comprises one or more of following:
the measurement duration being greater than or equal to first duration; or
the signal measurement result being greater than or equal to a first threshold.

17. The method according to any one of claims 1 to 14, wherein the reference signal is transmitted by using a plurality of beams, and the method further comprises:
transmitting, by the terminal device, fourth indication information to the primary cell, wherein the fourth indication information is used to indicate a target beam in the plurality of beams, and the target beam is a beam with an optimal signal measurement result in the plurality of beams.

18. The method according to claim 17, further comprising:
receiving, by the terminal device, fifth indication information transmitted by the primary cell, wherein the fifth indication information is used to indicate a first physical random access channel PRACH occasion; and
transmitting, by the terminal device, a preamble to the first cell on the first PRACH occasion.

19. The method according to any one of claims 1 to 7, wherein the transmitting of the reference signal is triggered by the terminal device, and the method further comprises:
transmitting, by the terminal device, a first request message, wherein the first request message is used for requesting the first cell to transmit the reference signal, and the first request message is transmitted by the terminal device to the primary cell, or the first request message is transmitted by the terminal device to the first cell.

20. The method according to claim 19, wherein the first request message comprises sixth indication information, the sixth indication information is used to indicate a cell that is required to transmit the reference signal, and the cell that is required to transmit the reference signal comprises the first cell.

21. The method according to claim 19 or 20, wherein the transmitting, by the terminal device, the first request message comprises:
transmitting, by the terminal device, the first request message in a case in which a second condition is satisfied, wherein the second condition comprises one or more of following:
a signal measurement result for the first cell being less than or equal to a second threshold; or
the terminal device being unable to determine downlink subframe boundary information of the first cell.

22. The method according to claim 21, wherein in a case in which a third condition is satisfied, the terminal device is unable to determine the downlink subframe boundary information of the first cell, and the third condition comprises that a time interval between a current instant and a first instant is greater than or equal to a third threshold, wherein the first instant is an instant of last data transmission between the terminal device and the first cell.

23. The method according to any one of claims 1 to 22, wherein the reference signal comprises one or more of following: a synchronization signal and physical broadcast channel block SSB, a channel state information reference signal CSI-RS, or a tracking reference signal TRS.

24. The method according to any one of claims 1 to 23, wherein the primary cell is co-located with the first cell.

25. A terminal device, comprising:
a receiving unit, receiving a reference signal transmitted by a first cell, wherein the transmitting of the reference signal is triggered by the terminal device and/or a primary cell.

26. The terminal device according to claim 25, wherein a transmission resource for the reference signal is a first resource, and the first resource is determined based on first indication information, or the first resource is a pre-configured resource.

27. The terminal device according to claim 26, wherein the first indication information is transmitted by the terminal device and/or the primary cell to the first cell.

28. The terminal device according to claim 26 or 27, wherein the first resource comprises one or more of following: a time resource, a frequency resource, or a beam.

29. The terminal device according to claim 28, wherein the first resource comprises a time resource, and the time resource is determined based on one or more of following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

30. The terminal device according to claim 28, wherein the first resource comprises a frequency resource, and the frequency resource is determined based on an absolute frequency value for transmitting the reference signal or a reference frequency for transmitting the reference signal.

31. The terminal device according to any one of claims 25 to 30, wherein the transmitting of the reference signal is triggered by the primary cell, and the receiving unit is further configured to:
receive second indication information transmitted by the primary cell, wherein the second indication information is used to indicate a second resource, and the second resource is used for receiving the reference signal transmitted by the first cell.

32. The terminal device according to claim 31, wherein the second resource comprises a time resource and/or a frequency resource.

33. The terminal device according to claim 32, wherein the second resource comprises a time resource, and the second indication information is used to indicate one or more of following: a transmission period of the reference signal, a start instant of transmitting the reference signal, an end instant of transmitting the reference signal, a time unit in which the reference signal is located, a location of the reference signal in a time unit, a quantity of times of transmitting the reference signal, or duration for transmitting the reference signal.

34. The terminal device according to claim 32, wherein the second resource comprises a frequency resource, and the second configuration information comprises an absolute frequency value for transmitting the reference signal or a reference frequency for transmitting the reference signal.

35. The terminal device according to claim 29 or 33, wherein the time unit comprises a system frame.

36. The terminal device according to claim 35, wherein the system frame is a system frame number of the primary cell.

37. The terminal device according to claim 30 or 34, wherein the reference frequency is one of following: a start frequency, a center frequency, or an end frequency.

38. The terminal device according to any one of claims 31 to 34, wherein the receiving unit is further configured to:
receive third indication information transmitted by the primary cell, wherein the third indication information is used to instruct the terminal device to measure the reference signal transmitted by the first cell.

39. The terminal device according to any one of claims 25 to 38, wherein the terminal device further comprises:
a transmitting unit, transmitting a signal measurement result of the reference signal to the primary cell in a case in which a first condition is satisfied, wherein the first condition is related to measurement duration and/or the signal measurement result.

40. The terminal device according to claim 39, wherein the first condition comprises one or more of following:
the measurement duration being greater than or equal to first duration; or
the signal measurement result being greater than or equal to a first threshold.

41. The terminal device according to any one of claims 25 to 40, wherein the reference signal is transmitted by using a plurality of beams, and
the terminal device further comprises a transmitting unit, transmitting fourth indication information to the primary cell, wherein the fourth indication information is used to indicate a target beam in the plurality of beams, and the target beam is a beam with an optimal signal measurement result in the plurality of beams.

42. The terminal device according to claim 41, wherein
the receiving unit is further configured to receive fifth indication information transmitted by the primary cell, wherein the fifth indication information is used to indicate a first physical random access channel PRACH occasion; and
the transmitting unit is further configured to transmit a preamble to the first cell on the first PRACH occasion.

43. The terminal device according to any one of claims 25 to 31, wherein the transmitting of the reference signal is triggered by the terminal device, and
the terminal device further comprises a transmitting unit, transmitting a first request message, wherein the first request message is used for requesting the first cell to transmit the reference signal, and the first request message is transmitted by the terminal device to the primary cell, or the first request message is transmitted by the terminal device to the first cell.

44. The terminal device according to claim 43, wherein the first request message comprises sixth indication information, the sixth indication information is used to indicate a cell that is required to transmit the reference signal, and the cell that is required to transmit the reference signal comprises the first cell.

45. The terminal device according to claim 43 or 44, wherein the transmitting unit is further configured to:
transmit the first request message in a case in which a second condition is satisfied, wherein the second condition comprises one or more of following:
a signal measurement result for the first cell being less than or equal to a second threshold; or
the terminal device being unable to determine downlink subframe boundary information of the first cell.

46. The terminal device according to claim 45, wherein in a case in which a third condition is satisfied, the terminal device is unable to determine the downlink subframe boundary information of the first cell, and the third condition comprises that a time interval between a current instant and a first instant is greater than or equal to a third threshold, wherein the first instant is an instant of last data transmission between the terminal device and the first cell.

47. The terminal device according to any one of claims 25 to 46, wherein the reference signal comprises one or more of following: a synchronization signal and physical broadcast channel block SSB, a channel state information reference signal CSI-RS, or a tracking reference signal TRS.

48. The terminal device according to any one of claims 25 to 47, wherein the primary cell is co-located with the first cell.

49. A terminal device, comprising a memory, a processor, and a transceiver, wherein the memory is configured to store one or more computer programs, and the processor is configured to invoke the computer programs in the memory, to cause the terminal device to execute the method according to any one of claims 1 to 24.
